# EUROPÄISCHE PATENTSCHRIFT

(11) **EP 3 315 931 B1**
(45) Veröffentlichungstag und Bekanntmachung des Hinweises auf die Patenterteilung: **22.05.2019**
(21) Anmeldenummer: 17197043.7
(22) Anmeldetag: 18.10.2017
(51) Int. Cl.: G01K 11/14, G01K 13/02, G01K 3/04, C09D 5/26

(54) **VERFAHREN ZUM BESTIMMEN DER TEMPERATUR IN EINEM STRÖMUNGSKANAL EINER GASTURBINE**
METHOD FOR DETERMINING THE TEMPERATURE IN A FLOW CHANNEL OF A GAS TURBINE
PROCÉDÉ DE DÉTERMINATION DE LA TEMPÉRATURE DANS UN CANAL D'ÉCOULEMENT D'UNE TURBINE À GAZ

(30) Priorität: 25.10.2016 DE 102016120297
(43) Veröffentlichungstag der Anmeldung: 02.05.2018
(73) Patentinhaber: Rolls-Royce Deutschland Ltd & Co KG, 15827 Blankenfelde-Mahlow (DE)
(72) Erfinder: LEHMANN, Knut, 15712 Königs Wusterhausen (DE)
(74) Vertreter: Müller, Wolfram Hubertus

(56) Entgegenhaltungen:
- EP-A1- 2 440 895
- EP-A2- 1 927 833
- DE-A1- 3 217 832
- DE-T2-602004 000 146
- JP-A- S54 110 884

## Beschreibung

### Technisches Gebiet

Die Erfindung betrifft ein Verfahren zum Bestimmen der Temperatur in einem Strömungskanal einer Gasturbine.

### Stand der Technik

Zur Messung der Temperatur der Strömung im Strömungskanal einer Gasturbine, die sich auf einem Prüfstand befindet, insbesondere zur Messung der Temperatur hinter der Brennkammer oder im Bereich der Hochdruckturbine ist es bekannt, mittels einer oder mehrerer Messsonden, die in den Strömungskanal hineinragen, Gasproben zu entnehmen und das entnommene Gas zu analysieren. Die Gaszusammensetzung ist abhängig von der Temperatur des entnommenen Gases, so dass über die Gaszusammensetzung die Temperatur bestimmbar ist.

Eine solche Vorgehensweise ist relativ aufwendig, da die Messsonden gekühlt werden müssen. Auch besteht die Gefahr, dass aufgrund der Größe der Messsonden die zu messende Strömung im Strömungskanal gestört wird.

Die EP 1 927 833 A2 beschreibt eine Temperatur-Messeinrichtung zur Messung der Temperatur eines Fluids, das an einer Komponente vorbeiströmt. Hierzu umfasst die Messeinrichtung eine Messeinheit, die aus einem Plättchen besteht, das auf beiden Seiten mit einem Temperatur-Aufzeichnungsmittel versehen ist. Hierbei handelt es sich zum einen um Wachselemente und zum anderen um Thermalfarben. Die Temperatur-Aufzeichnungsmittel zeichnen die Temperatur auf, die die Messeinheit im Fluidstrom erfährt. Die Messeinrichtungen erstrecken sich jeweils in Umfangsrichtung und sind dabei beabstandet zu der Komponente angeordnet, an der das Fluid vorbeiströmt.

Aus der EP 2 440 895 A1 ist es bekannt, einen Temperatursensor zum Messen der Momentantemperatur in einer Gasturbine einzusetzen. Hierzu wird ein stabförmiges Element eingesetzt, das eine Spitze umfasst, an der ein schnell ansprechendes Widerstandselement angeordnet ist. Eine Temperaturmessung erfolgt nur an der Spitze.

### Zusammenfassung der Erfindung

Der vorliegenden Erfindung liegt die Aufgabe zugrunde, ein einfaches Verfahren zum Bestimmen der Temperatur in einem Strömungskanal einer Gasturbine bereitzustellen, das die Strömung nicht oder nur minimal beeinflusst.

Diese Aufgabe wird erfindungsgemäß durch ein Verfahren mit den Merkmalen des Anspruchs 1 gelöst. Ausgestaltungen der Erfindung sind in den Unteransprüchen angegeben.

Danach sieht die Erfindung ein Verfahren zum Bestimmen der Temperatur in einem Strömungskanal einer Gasturbine, die sich auf einem Prüfstand befindet, mit den folgenden Schritten vor:
- Anordnen mindestens eines mit einer Thermalfarbenbeschichtung versehenen stabförmigen Elements im Strömungskanal,
- Betreiben der Gasturbine auf dem Prüfstand in einem definierten Betriebsmodus, wobei die Thermalfarbenbeschichtung des mindestens einen stabförmigen Elements sich in Abhängigkeit von der Temperatur, der die Thermalfarbenbeschichtung ausgesetzt ist, verfärbt,
- Erfassen der Farbverteilung der Thermalfarbenbeschichtung des mindestens einen stabförmigen Elements, und
- Bestimmen der Temperatur, die im Strömungskanal entlang des mindestens einen stabförmigen Elements im definierten Betriebsmodus vorlag, anhand der erfassten Farbverteilung,
- wobei das mindestens eine mit einer Thermalfarbenbeschichtung versehenes stabförmige Element sich radial erstreckend im Strömungskanal angeordnet und über die Farbverteilung das Temperaturprofil der Strömung im Strömungskanal entlang der radialen Richtung an einer gegebenen Umfangsposition und einer gegebenen axialen Position erfasst wird.

Die Erfindung beruht auf dem Gedanken, Thermalfarben zur Messung der Temperatur der Strömung im Strömungskanal einer Gasturbine einzusetzen und hierzu mindestens ein stabförmiges Element bereitzustellen, das mit einer Thermalfarbenbeschichtung versehen ist. Die Thermalfarbe der verwendeten Thermalfarbenbeschichtung weist die Eigenschaft auf, sich bei Temperaturen zu verfärben, die bei dem Betriebszustand herrschen, bei dem die Messung stattfindet. Über die Thermalfarbenbeschichtung bzw. den Farbverlauf der Thermalfarbenbeschichtung kann somit die Temperatur entlang des stabförmigen Elements bestimmt werden. Durch die Verwendung eines länglichen, stabförmigen Elementes wird gleichzeitig sichergestellt, dass die Strömung im Strömungskanal durch die Messvorrichtung nur minimal gestört wird.

Als Thermalfarben werden Farben bezeichnet, die in Abhängigkeit von der Temperatur ihre Farbe verändern. Dies kann reversibel oder irreversibel erfolgen. Bei einer irreversiblen Farbänderung, die gemäß einer Ausgestaltung der Erfindung vorgesehen ist, kann die Auswertung des Farbverlauf zu einer beliebigen Zeit nach Beendigung eines Messvorgangs erfolgen. Bei einer irreversiblen Farbänderung wird die endgültige Farbe der Thermalfarbenbeschichtung dabei bestimmt durch die höchste Temperatur, der die Thermalfarbenbeschichtung während des Betriebs der Gasturbine ausgesetzt war. Dementsprechend wird die höchste aufgetretene Temperatur erfasst.

Bei einer reversiblen Farbänderung ist der Farbverlauf nach Erreichen des zu messenden Betriebsmodus beispielsweise über eine Kamera festzuhalten.

Als Thermalfarbenbeschichtung wird jede Beschichtung bezeichnet, die Thermalfarben enthält und die die Oberfläche des stabförmigen Elements bedeckt. Die Thermalfarbenbeschichtung kann beispielsweise durch Besprühen oder in einem Bad aufgebracht werden. Die Thermalfarbenbeschichtung kann das stabförmige Element entlang seiner gesamten Oberfläche bedecken oder alternativ einen länglichen Streifen auf dem stabförmigen Element bilden.

Thermalfarben, die zur Temperaturindikation im Triebwerksbereich geeignet sind, sind grundsätzlich bekannt. Beispielsweise beschreibt die US 7,404,925 B2 die Verwendung von Thermalfarben zur Bestimmung der Temperatur von strukturellen Komponenten einer Gasturbine bei der Entwicklung einer Gasturbine. Weitere Beispiele für zur Temperaturindikation im Triebwerksbereich geeignete Thermalfarben sind die von dem Unternehmen Thermal Paint Services, Inc. in 8245 Cichlid Way, San Diego, CA 92129, USA verkaufte Thermalfarbe KN 6, die in einem Temperaturbereich zwischen 158°C und 1380°C eine temperaturabhängige Farbe ausbildet, und die von dem Unternehmen LCR Hallcrest Ltd, Riverside Buildings, Dock Road, Connah's Quay, Flintshire, CH5 4DS, Großbritannien verkaufte Thermalfarbe MC470-9, die in einem Temperaturbereich zwischen 470°C und 1210°C eine temperaturabhängige Farbe ausbildet.

Definierte Betriebsmodi der Gasturbine, bei denen Messungen erfolgen, sind alle Betriebszustände, in denen eine Gasturbine betrieben werden kann. Im Falle eines Flugtriebwerks liegt ein definierter Betriebsmodus beispielsweise vor, wenn das Flugtriebwerk auf dem Prüfstand gemäß den Betriebsbedingungen bei Start, Reiseflug, Sinkflug, etc. betrieben wird.

### Ausgestaltungen der Erfindung

Eine Ausgestaltung der Erfindung sieht vor, dass mehrere stabförmigen Elemente an unterschiedlichen Umfangspositionen und/oder an unterschiedlichen axialen Positionen im Strömungskanal angeordnet sind.

Eine weitere Ausgestaltung der Erfindung sieht vor, dass eine Mehrzahl mit einer Thermalfarbenbeschichtung versehener stabförmiger Elemente mit jeweils radialer Erstreckung und in Umfangsrichtung beabstandet im Strömungskanal angeordnet wird. Die stabförmigen Elemente bilden dabei ein eindimensionales Gitter. Über die Farbverteilungen der Thermalfarbenbeschichtungen der Mehrzahl der stabförmigen Elemente kann ein zweidimensionales Temperaturprofil der Strömung im Strömungskanal an einer gegebenen axialen Position erfasst werden.

Gemäß einer weiteren Ausgestaltung bildet die Mehrzahl der mit einer Thermalfarbenbeschichtung versehenen stabförmigen Elemente, die im Strömungskanal angeordnet werden, ein zweidimensionales Gitter, in dem sich die stabförmigen Elemente in zwei unterschiedlichen Richtungen erstrecken. Da bei dieser Ausgestaltung die Farbverteilungen der Thermalfarbenbeschichtungen in zwei Richtungen erfasst werden können, kann ein zweidimensionales Temperaturprofil der Strömung im Strömungskanal an einer gegebenen axialen Position mit einer noch höheren Auflösung erfasst werden.

Bei dem stabförmigen Element, das mit einer Thermalfarbenbeschichtung versehen ist, handelt es sich beispielsweise um einen massiven Keramikstab. Alternativ wird als stabförmiges Element ein mit einer Thermalfarbenbeschichtung versehener Draht verwendet. Hierbei handelt es sich beispielsweise um einen Wolframdraht.

Eine weitere Ausgestaltung der Erfindung sieht vor, dass das stabförmige Element einen kreisförmigen Querschnitt aufweist. Beispielsweise wird als stabförmiges Element somit ein im Querschnitt kreisförmiger Keramikstab oder Wolframdraht verwendet.

Allgemein wird jedes Element als stabförmig im Sinne der vorliegenden Erfindung bezeichnet, bei dem die Länge um mindestens den Faktor 5, insbesondere um mindestens den Faktor 10, insbesondere um mindestens den Faktor 50 größer ist als der Durchmesser. Das stabförmige Element kann aus einem starren oder aus einem biegsamen Material bestehen.

Das stabförmige Element, das im Strömungskanal angeordnet wird, weist einen Durchmesser auf, der gemäß einem Ausführungsbeispiel zwischen 0,2 mm und 5 mm, insbesondere zwischen 0,5 mm und 2 mm liegt. Je geringer der Durchmesser des stabförmigen Elements, desto geringer der Grad der Beeinflussung der Strömung durch das stabförmige Element.

Die Wahl des Durchmessers des stabförmigen Elementes wird darüber hinaus durch zwei Erwägungen bestimmt, zwischen denen ein Kompromiss zu finden ist. Stabförmige Elemente mit einem geringen Durchmesser sind insofern vorteilhaft, als sie eine Wärmeleitung entlang des stabförmigen Elements und ein damit verbundenes verschmieren der Temperaturinformationen reduzieren. Stabförmige Elemente mit einem größeren Durchmesser sind insofern vorteilhaft, als sie eine größere mechanische Stabilität bereitstellen und ein Erfassen der Farbinformationen der Thermalfarben auf dem stabförmigen Element erleichtern.

Grundsätzlich kann das mindestens eine stabförmige Element zur Temperaturmessung an einer beliebigen Stelle im Strömungskanal einer Gasturbine angeordnet werden. Ausgestaltungen der Erfindung sehen vor, dass das mit einer Thermalfarbenbeschichtung versehene stabförmige Element unmittelbar hinter der Brennkammer der Gasturbine oder hinter einer Leitschaufel oder einer Laufschaufel einer Turbinenstufe im Hauptströmungskanal angeordnet wird. Dort herrschen Temperaturen von über 1000 °C, beispielsweise bis zu ca. 1200 °C, so dass Thermalfarben verwendet werden, die in diesem Bereich farblich aktiv sind.

Zur Befestigung des stabförmigen Elementes im Hauptströmungskanal ist gemäß einer Ausgestaltung der Erfindung vorgesehen, dass das stabförmige Element an seinen beiden Enden zwischen einer radial äußeren Struktur und einer radial inneren Struktur der Gasturbine eingespannt wird, die den Hauptströmungspfad begrenzen. Beispielsweise kann vorgesehen sein, dass das stabförmige Element zwischen einer äußeren Plattform und einer inneren Plattform eines Turbinen-Leitschaufelsegments eines Turbinen-Leitschaufelkranzes eingespannt wird. In alternativen Ausgestaltungen ist vorgesehen, dass das stabförmige Element nur an einer radial äußeren Struktur, insbesondere einer Gehäusestruktur, die den Hauptströmungskanal radial außen begrenzt, oder nur an einer radial inneren Struktur, die den Hauptströmungskanal radial innen begrenzt, befestigt ist. Es ragt in diesem Fall von einer Seite in den Hauptströmungskanal hinein.

Das erfindungsgemäße Verfahren setzt eine Messvorrichtung ein, die ein mit einer Thermalfarbenbeschichtung versehenes stabförmiges Element aufweist.

Die Wahl der Thermalfarbe hängt dabei vom Einsatzort bzw. den dort im auszumessenden Betriebszustand herrschenden Temperaturen ab. Beispielsweise ist die Thermalfarbenbeschichtung dazu vorgesehen und ausgebildet, sich bei Temperaturen zu verfärben, die am Ausgang der Brennkammer im Hauptströmungspfad einer Gasturbine auftreten, oder sich bei Temperaturen zu verfärben, die in der Turbine, insbesondere der Hochdruckturbine im Hauptströmungspfad einer Gasturbine auftreten.

Die Messvorrichtung kann mehrere stabförmige Elemente aufweisen, die ein eindimensionales Gitter oder ein zweidimensionales Gitter bilden.

Wie bereits angemerkt, ist in einer Ausgestaltung der Erfindung vorgesehen, dass die Thermalfarbenbeschichtung irreversibel in dem Sinne ist, dass die höchste Temperatur, der die Thermalfarbenbeschichtung ausgesetzt ist, deren Farbe bestimmt. Damit werden dem stabförmigen Element entlang seiner Längserstreckung die höchsten Temperaturen gewissermaßen farblich eingebrannt, denen es während des Betriebs auf dem Prüfstand ausgesetzt ist. Es wird somit ein stationäres Farbprofil, dass über seine Farbverteilung ein stationäres Temperaturprofil kodiert, erzeugt.

### Detaillierte Beschreibung der Erfindung

Die Erfindung wird nachfolgend unter Bezugnahme auf die Figuren der Zeichnung anhand eines Ausführungsbeispiels näher erläutert. Es zeigen:
- Figur 1: eine vereinfachte schematische Schnittdarstellung eines Turbofantriebwerks, in dem die vorliegende Erfindung realisierbar ist;
- Figur 2: einen Teilabschnitt des Hauptströmungskanals eines Turbofantriebwerks, wobei die Öffnung der Brennkammer und ein daran angrenzendes Turbinen-Leitschaufelsegment der Stufe 1 eines Hochdruckverdichters dargestellt sind, und wobei in Strömungsrichtung hinter dem Turbinen-Leitschaufelsegment ein mit einer Thermalfarbenbeschichtung versehenes stabförmiges Element im Hauptströmungskanal angeordnet ist; und
- Figur 3: eine Querschnittsansicht eines mit einer Thermalfarbenbeschichtung versehenen stabförmigen Elements.

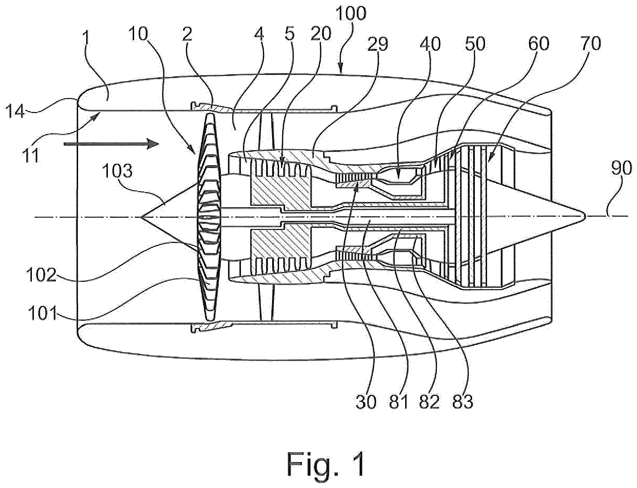

Die Figur 1 zeigt schematisch ein Turbofantriebwerk 100, das eine Fanstufe mit einem Fan 10 als Niederdruckverdichter, einen Mitteldruckverdichter 20, einen Hochdruckverdichter 30, eine Brennkammer 40, eine Hochdruckturbine 50, eine Mitteldruckturbine 60 und eine Niederdruckturbine 70 aufweist.

Der Mitteldruckverdichter 20 und der Hochdruckverdichter 30 weisen jeweils eine Mehrzahl von Verdichterstufen auf, die jeweils eine Rotorstufe und eine Statorstufe umfassen. Das Turbofantriebwerk 100 der Figur 1 weist des Weiteren drei separate Wellen auf, eine Niederdruckwelle 81, die die Niederdruckturbine 70 mit dem Fan 10 verbindet, eine Mitteldruckwelle 82, die die Mitteldruckturbine 60 mit dem Mitteldruckverdichter 20 verbindet und eine Hochdruckwelle 83, die die Hochdruckturbine 50 mit dem Hochdruckverdichter 30 verbindet. Dies ist jedoch lediglich beispielhaft zu verstehen. Wenn das Turbofantriebwerk beispielsweise keinen Mitteldruckverdichter und keine Mitteldruckturbine besitzt, wären nur eine Niederdruckwelle und eine Hochdruckwelle vorhanden.

Das Turbofantriebwerk 100 weist eine Triebwerksgondel 1 auf, die eine Einlauflippe 14 umfasst und innenseitig einen Triebwerkseinlauf 11 ausbildet, der einströmende Luft dem Fan 10 zuführt. Der Fan 10 weist eine Mehrzahl von Fan-Schaufeln 101 auf, die mit einer Fan-Scheibe 102 verbunden sind. Der Annulus der Fan-Scheibe 102 bildet dabei die radial innere Begrenzung des Strömungspfads durch den Fan 10. Radial außen wird der Strömungspfad durch ein Fangehäuse 2 begrenzt. Stromaufwärts der Fan-Scheibe 102 ist ein Nasenkonus 103 angeordnet.

Hinter dem Fan 10 bildet das Turbofantriebwerk 100 einen Sekundärstromkanal 4 und einen Primärstromkanal 5 aus. Der Primärstromkanal 5 führt durch das Kerntriebwerk (Gasturbine), das den Mitteldruckverdichter 20, den Hochdruckverdichter 30, die Brennkammer 40, die Hochdruckturbine 50, die Mitteldruckturbine 60 und die Niederdruckturbine 70 umfasst. Dabei sind der Mitteldruckverdichter 20 und der Hochdruckverdichter 30 von einem Umfangsgehäuse 29 umgeben, dass innenseitig eine Ringraumfläche bildet, die den Primärstromkanal 5 radial außen begrenzt. Radial innen ist der Primärstromkanal 5 durch entsprechende Kranzoberflächen der Rotoren und Statoren der jeweiligen Verdichterstufen bzw. durch die Nabe oder mit der Nabe verbundene Elemente der entsprechenden Antriebswelle begrenzt.

Im Betrieb des Turbofantriebwerks 100 durchströmt ein Primärstrom den Primärstromkanal 5 (nachfolgend auch als Hauptströmungskanal bezeichnet). Der Sekundärstromkanal 4, auch als Nebenstromkanal, Mantelstromkanal oder Bypass-Kanal bezeichnet, leitet im Betrieb des Turbofantriebwerks 100 vom Fan 10 angesaugte Luft am Kerntriebwerk vorbei.

Die beschriebenen Komponenten besitzen eine gemeinsame Symmetrieachse 90. Die Symmetrieachse 90 definiert eine axiale Richtung des Turbofantriebwerks. Eine radiale Richtung des Turbofantriebwerks verläuft senkrecht zur axialen Richtung.

Im Kontext der vorliegenden Erfindung wird die Situation betrachtet, dass das Turbofantriebwerk 100 oder ein anderes Flugtriebwerk oder eine Gasturbine sich auf einem Prüfstand befindet und die Temperatur im Hauptströmungskanal gemessen wird.

Zur Temperaturmessung wird mindestens ein mit einer Thermalfarbenbeschichtung versehenes stabförmige Element im Hauptströmungskanal angeordnet. Nach Platzierung des stabförmigen Elementes in dem Bereich, in dem die Temperaturmessung erfolgen soll, wird das Turbofantriebwerk auf dem Prüfstand in einem definierten Modus betrieben. Dabei verfärbt sich die Thermalfarbenbeschichtung des stabförmigen Elementes in Abhängigkeit von der Temperatur, der die Thermalfarbenbeschichtung ausgesetzt ist. Anhand der Farbverteilung der Thermalfarbenbeschichtung wird die Temperatur bestimmt, die im Hauptströmungskanal entlang des stabförmigen Elementes im definierten Betriebsmodus vorlag. So besteht eine eineindeutige Relation zwischen der Farbe und der Temperatur.

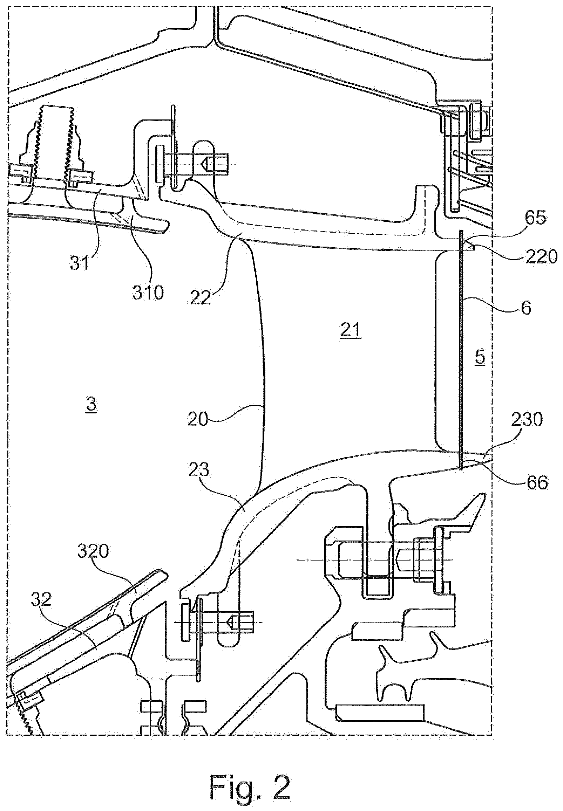

Gemäß der Figur 2 erfolgt eine Temperaturmessung beispielsweise hinter dem ersten Leitschaufelkranz einer Hochdruckturbine, die hinter der Brennkammer angeordnet ist. Die Figur 2 zeigt eine Brennkammer 3, die eine radial äußere Brennkammerwand 31 und eine radial innere Brennkammerwand 32 umfasst. Die Brennkammerwände 31, 32 sind mit Hitzeschindeln 310, 320 ausgekleidet. In Strömungsrichtung unmittelbar hinter dem Ausgang der Brennkammer 3 befindet sich ein Leitschaufelkranz, der aus einer Mehrzahl von Leitschaufelsegmenten 20 besteht, die in Umfangsrichtung nebeneinander angeordnet sind und zusammen den Leitschaufelkranz bilden.

Jedes Leitschaufelsegment 20 umfasst eine oder mehrere Leitschaufeln 21, eine äußere Plattform 22 und eine innere Plattform 23.

Zur Temperaturmessung wird ein stabförmiges Element 6 eingesetzt, das sich in radialer Richtung durch den Hauptströmungskanal 5 erstreckt. Zur Befestigung des stabförmigen Elementes 6 weist die äußere Plattform 22 an ihrem stromabseitigen Ende 220 und die innere Plattform 23 an ihrem stromabseitigen Ende 230 jeweils eine Bohrung oder dergleichen auf, die die Enden 65, 66 des stabförmigen Elementes 6 aufnimmt und dieses fixiert.

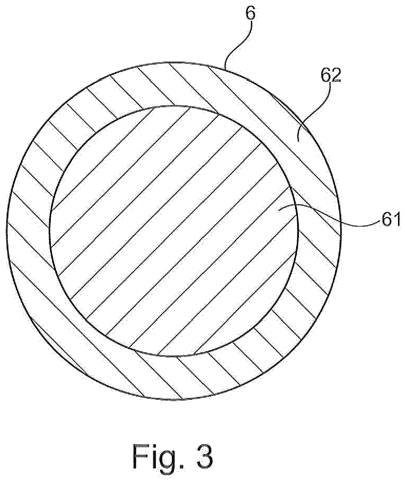

Das stabförmige Element 6 besteht gemäß der Figur 3 aus einem stabförmigen Kern 61, der von einer Thermalfarbenbeschichtung 62, die Thermalfarben enthält, ummantelt ist. Die Thermalfarbenbeschichtung 62 ist beispielsweise durch Besprühen oder durch Eintauchen des stabförmigen Kerns 61 in ein Bad mit Thermalfarben bereitgestellt worden. Die in der Figur 3 dargestellte kreisförmige Querschnittsform des stabförmigen Elementes 6 ist nur beispielhaft zu verstehen. Grundsätzlich kann das stabförmige Element eine beliebige Querschnittsform aufweisen.

Bei dem stabförmigen Kern 61 handelt es sich beispielsweise um einen massiven Keramikstab, der bei den auftretenden Temperaturen von über 1000 °C hitzebeständig ist. Beispielsweise besteht der massive Keramikstab aus einer gesinterten hochwertigen Al₂O₃-Keramik. Ein weiteres geeignetes Material ist SSiC (gesintertes Siliziumcarbid). Das stabförmige Element 6 weist beispielsweise einen Durchmesser auf, der im Bereich zwischen 0,2 mm und 5 mm, insbesondere im Bereich zwischen 0,5 mm und 2 mm liegt, einschließlich der Beschichtung.

Die Thermalfarbenbeschichtung 62 weist Thermalfarben auf, deren Farbe sich bei Temperaturen abhängig von der Temperatur einstellt, wie sie am Messort, im betrachteten Ausführungsbeispiel hinter dem ersten Turbinen-Leitschaufelkranz auftreten. Die hinter dem ersten Turbinen-Leitschaufelkranz auftretenden Temperaturen liegen typischerweise im Bereich zwischen 1000°C und 1400°C, insbesondere im Bereich zwischen 1000°C und 1200°C. Die verwendeten Thermalfarben sind dabei gemäß einem Ausführungsbeispiel irreversibel, d.h. sie behalten die Farbe, die sie bei der höchsten Temperatur angenommen haben, deren sie ausgesetzt waren.

Über das Farbprofil entlang des Keramikstabs 6 kann somit nach Abschluss des Betriebs des Flugtriebwerks im Prüfstand unmittelbar das Temperaturprofil der am Messort aufgetretenen höchsten Temperaturen bestimmt werden. Über ein einzelnes stabförmiges Element 6 kann dabei das Temperaturprofil entlang der radialen Richtung an einer bestimmten Umfangsposition und einer bestimmten axialen Position im Hauptströmungskanal 5 bestimmt werden.

Sofern an jedem Leitschaufelsegment 20 des Leitschaufelkranzes ein oder mehrere stabförmige Elemente 6 vorgesehen sind, bilden die stabförmigen Elemente 6 ein eindimensionales Gitter und kann über die Mehrzahl solcher stabförmiger Elemente ein zweidimensionales Temperaturprofil der Strömung im Hauptströmungskanal an der gegebenen axialen Position erfasst werden.

Auch kann vorgesehen sein, dass weitere stabförmige Elemente eingesetzt werden, die sich in einer anderen Richtung längs erstrecken, beispielsweise jeweils von der äußeren Plattform 22 eines Leitschaufelsegments zu einer inneren Plattform 23 eines dazu benachbarten Leitschaufelsegments, so dass insgesamt eine Art Kreuzgitter bereitgestellt wird, wodurch ein zweidimensionales Temperaturprofil an der gegebenen axialen Position noch genauer aufgenommen werden kann.

In einem alternativen Ausführungsbeispiel wird als stabförmiger Kern 61 nicht ein Keramikstab, sondern ein Wolframdraht verwendet, der mit Thermalfarben beschichtet ist.

## Patentansprüche

1. Verfahren zum Bestimmen der Temperatur in einem Strömungskanal einer Gasturbine, die sich auf einem Prüfstand befindet, wobei das Verfahren umfasst:
- Anordnen mindestens eines mit einer Thermalfarbenbeschichtung (62) versehenen stabförmigen Elements (6) im Strömungskanal (5),
- Betreiben der Gasturbine auf dem Prüfstand in einem definierten Betriebsmodus, wobei die Thermalfarbenbeschichtung (62) des mindestens einen stabförmigen Elements (6) sich in Abhängigkeit von der Temperatur, der die Thermalfarbenbeschichtung (62) ausgesetzt ist, verfärbt,
- Erfassen der Farbverteilung der Thermalfarbenbeschichtung (62) des mindestens einen stabförmigen Elements (6), und
- Bestimmen der Temperatur, die im Strömungskanal (5) entlang des mindestens einen stabförmigen Elements (6) im definierten Betriebsmodus vorlag, anhand der erfassten Farbverteilung,
- wobei das mindestens eine mit einer Thermalfarbenbeschichtung (62) versehene stabförmige Element (6) sich radial erstreckend im Strömungskanal (5) angeordnet und über die Farbverteilung das Temperaturprofil der Strömung im Strömungskanal (5) entlang der radialen Richtung an einer gegebenen Umfangsposition und einer gegebenen axialen Position erfasst wird.

2. Verfahren nach Anspruch 1, **dadurch gekennzeichnet, dass** eine Mehrzahl mit einer Thermalfarbenbeschichtung (62) versehener stabförmiger Elemente (6) mit jeweils radialer Erstreckung und in Umfangsrichtung beabstandet im Strömungskanal (5) angeordnet wird und über die Farbverteilungen der Thermalfarbenbeschichtungen der Mehrzahl der stabförmigen Elemente (6) ein zweidimensionales Temperaturprofil der Strömung im Strömungskanal (5) an einer gegebenen axialen Position erfasst wird.

3. Verfahren nach Anspruch 1, **dadurch gekennzeichnet, dass** eine Mehrzahl mit einer Thermalfarbenbeschichtung (62) versehener stabförmigen Elemente (6), die ein zweidimensionales Gitter bilden, im Strömungskanal (5) angeordnet wird und die Farbverteilungen der Thermalfarbenbeschichtungen der Mehrzahl der stabförmigen Elemente (6) erfasst und ausgewertet werden.

4. Verfahren nach einem der vorangehenden Ansprüche, **dadurch gekennzeichnet, dass** als stabförmiges Element (6) ein mit einer Thermalfarbenbeschichtung (62) versehener massiver Keramikstab (61) im Strömungskanal (5) angeordnet wird.

5. Verfahren nach einem der Ansprüche 1 bis 3, **dadurch gekennzeichnet, dass** als stabförmiges Element (6) ein mit einer Thermalfarbenbeschichtung (62) versehener Draht im Strömungskanal (5) angeordnet wird.

6. Verfahren nach Anspruch 5, **dadurch gekennzeichnet, dass** als stabförmiges Element (6) ein mit einer Thermalfarbenbeschichtung (62) versehener Wolframdraht im Strömungskanal (5) angeordnet wird.

7. Verfahren nach einem der vorangehenden Ansprüche, **dadurch gekennzeichnet, dass** das mit einer Thermalfarbenbeschichtung (62) versehene stabförmige Element (6) an seinen Enden zwischen einer radial äußeren Struktur (22) und einer radial inneren Struktur (23) der Gasturbine eingespannt wird, die den Hauptströmungspfad (5) begrenzen.

8. Verfahren nach einem der vorangehenden Ansprüche, **dadurch gekennzeichnet, dass** das stabförmige Element (6) mit einer Thermalfarbenbeschichtung (62) versehen ist, deren Farbe sich abhängig von der Temperatur irreversibel ändert, wobei die maximale Temperatur durch die Thermalfarbenbeschichtung (62) festgehalten und bestimmt wird, der die Thermalfarbenbeschichtung (62) während des Betriebs des Gasturbine ausgesetzt war.

9. Verfahren nach einem der vorangehenden Ansprüche, **dadurch gekennzeichnet, dass** das stabförmige Element (6) einen Durchmesser aufweist, der zwischen 0,2 mm und 5 mm, insbesondere zwischen 0,5 mm und 2 mm liegt.

10. Verfahren nach einem der vorangehenden Ansprüche, **dadurch gekennzeichnet, dass** das stabförmige Element (6) einen kreisförmigen Querschnitt aufweist.

11. Verfahren nach einem der vorangehenden Ansprüche, **dadurch gekennzeichnet, dass** das stabförmige Element (6) am Ausgang der Brennkammer (40) oder in der Hochdruckturbine (50) im Hauptströmungskanal (5) der Gasturbine angeordnet wird.

## Claims

1. Method for determining the temperature in a flow channel of a gas turbine positioned on a testing bench, wherein the method comprises:
- arranging at least one rod-shaped element (6) provided with a thermal paint coating (62) inside the flow channel (5),
- operating the gas turbine on the testing bench in a defined operating mode, wherein the thermal paint coating (62) of the at least one rod-shaped element (6) changes color depending on the temperature that the thermal paint coating (62) is exposed to,
- detecting the color distribution of the thermal paint coating (62) of the at least one rod-shaped element (6), and
- determining the temperature that had been present in the flow channel (5) along the at least one rod-shaped element (6) in the defined operating mode based on the detected color distribution,
- wherein the at least one rod-shaped element (6) that is provided with a thermal paint coating (62) is arranged in a radially extending manner inside the flow channel (5), and the temperature profile of the flow in the flow channel (5) along the radial direction is detected at a given circumferential position and a given axial position based on the color distribution.

2. Method according to claim 1, **characterized in that** a plurality of rod-shaped elements (6) that are provided with a thermal paint coating (62) is arranged inside the flow channel (5) respectively with a radial extension and at a distance with respect to one another in the circumferential direction, and that a two-dimensional temperature profile of the flow in the flow channel (5) at a given axial position is detected based on the color distributions of the thermal paint coatings of the plurality of rod-shaped elements (6).

3. Method according to claim 1, **characterized in that** a plurality of rod-shaped elements (6) that are provided with a thermal paint coating (62) and that form a two-dimensional grid is arranged inside the flow channel (5), and that the color distributions of the thermal paint coatings of the plurality of rod-shaped elements (6) are detected and analyzed.

4. Method according to any of the preceding claims, **characterized in that** a solid ceramic rod (61) provided with a thermal paint coating (62) is arranged inside the flow channel (5) as the rod-shaped element (6).

5. Method according to any of the claims 1 to 3, **characterized in that** a wire provided with a thermal paint coating (62) is arranged inside the flow channel (5) as the rod-shaped element (6).

6. Method according to claim 5, **characterized in that** a tungsten wire provided with a thermal paint coating (62) is arranged inside the flow channel (5) as the rod-shaped element (6).

7. Method according to any of the preceding claims, **characterized in that** the rod-shaped element (6) provided with a thermal paint coating (62) is clamped at its ends between a radially outer structure (22) and a radially inner structure (23) of the gas turbine which delimit the main flow path (5).

8. Method according to any of the preceding claims, **characterized in that** the rod-shaped element (6) is provided with a thermal paint coating (62), the color of which changes irreversibly depending on the temperature, wherein the maximum temperature that the thermal paint coating (62) has been exposed to during operation of the gas turbine is recorded and determined by means of the thermal paint coating (62).

9. Method according to any of the preceding claims, **characterized in that** the rod-shaped element (6) has a diameter that is between 0.2 mm and 5 mm, in particular between 0.5 mm and 2 mm.

10. Method according to any of the preceding claims, **characterized in that** the rod-shaped element (6) has a circular cross section.

11. Method according to any of the preceding claims, **characterized in that** the rod-shaped element (6) is arranged at the exit of the combustion chamber (40) or in the high-pressure turbine (50) in the main flow channel (5) of the gas turbine.

## Revendications

1. Procédé de détermination de la température dans un canal d'écoulement d'une turbine à gaz, qui se trouve sur un banc d'essai, dans lequel le procédé comprend les opérations suivantes:
- agencer dans le canal d'écoulement (5) au moins un élément en forme de barreau (6) muni d'un revêtement de couleur thermique (62),
- faire fonctionner la turbine à gaz sur le banc d'essai dans un mode de fonctionnement défini, dans lequel le revêtement de couleur thermique (62) dudit au moins un élément en forme de barreau (6) se colore en fonction de la température à laquelle le revêtement de couleur thermique (62) est exposé,
- détecter la distribution des couleurs du revêtement de couleur thermique (62) dudit au moins un élément en forme de barreau (6),
- déterminer la température, qui prévalait dans le canal d'écoulement (5) le long dudit au moins un élément en forme de barreau (6) dans le mode de fonctionnement défini, à l'aide de la distribution des couleurs,
- dans lequel on agence ledit au moins un élément en forme de barreau (6) muni d'un revêtement de couleur thermique (62) pour qu'il s'étende radialement dans le canal d'écoulement (5) et on détecte au moyen de la distribution des couleurs le profil de température de l'écoulement dans le canal d'écoulement (5) le long de la direction radiale à une position périphérique donnée et à une position axiale donnée.

2. Procédé selon la revendication 1, **caractérisé en ce que** l'on agence dans le canal d'écoulement (5) une multiplicité d'éléments en forme de barreau (6) munis d'un revêtement de couleur thermique (62) chacun avec une extension radiale et espacés en direction périphérique et on détecte au moyen des distributions des couleurs des revêtements de couleur thermique de la multiplicité des éléments en forme de barreau (6) un profil de température bidimensionnel de l'écoulement dans le canal d'écoulement (5) à une position axiale donnée.

3. Procédé selon la revendication 1, **caractérisé en ce que** l'on agence dans le canal d'écoulement (5) une multiplicité d'éléments en forme de barreau (6) munis d'un revêtement de couleur thermique (62), qui forment une grille bidimensionnelle dans le canal d'écoulement (5), et on détecte et on analyse les distributions des couleurs des revêtements de couleur thermique de la multiplicité des éléments en forme de barreau (6).

4. Procédé selon l'une quelconque des revendications précédentes, **caractérisé en ce que** l'on agence dans le canal d'écoulement (5), en tant qu'élément en forme de barreau (6), un barreau céramique massif (61) muni d'un revêtement de couleur thermique (62).

5. Procédé selon l'une quelconque des revendications 1 à 3, **caractérisé en ce que** l'on agence comme élément en forme de barreau (6) dans le canal d'écoulement (5) un fil muni d'un revêtement de couleur thermique (62).

6. Procédé selon la revendication 5, **caractérisé en ce que** l'on agence comme élément en forme de barreau (6) dans le canal d'écoulement (5) un fil de tungstène muni d'un revêtement de couleur thermique (62).

7. Procédé selon l'une quelconque des revendications précédentes, **caractérisé en ce que** l'on encastre l'élément en forme de barreau (6) muni d'un revêtement de couleur thermique (62) à ses extrémités entre une structure radialement extérieure (22) et une structure radialement intérieure (23) de la turbine à gaz, qui limitent le chemin d'écoulement principal (5).

8. Procédé selon l'une quelconque des revendications précédentes, **caractérisé en ce que** l'élément en forme de barreau (6) est muni d'un revêtement de couleur thermique (62), dont la couleur change de façon irréversible en fonction de la température, dans lequel on constate et on détermine, au moyen du revêtement de couleur thermique (62), la température maximale à laquelle le revêtement de couleur thermique (62) a été exposé pendant le fonctionnement de la turbine à gaz.

9. Procédé selon l'une quelconque des revendications précédentes, **caractérisé en ce que** l'élément en forme de barreau (6) présente un diamètre qui se situe entre 0,2 mm et 5 mm, en particulier entre 0,5 mm et 2 mm.

10. Procédé selon l'une quelconque des revendications précédentes, **caractérisé en ce que** l'élément en forme de barreau (6) présente une section transversale ronde.

11. Procédé selon l'une quelconque des revendications précédentes, **caractérisé en ce que** l'on agence l'élément en forme de barreau (6) à la sortie de la chambre de combustion (40) ou dans la turbine haute pression (50) dans le canal d'écoulement principal (5) de la turbine à gaz.
